(19) Europäisches Patentamt
European Patent Office
Office européen des brevets

(11) **EP 2 305 047 B1**

(12) **EUROPEAN PATENT SPECIFICATION**

(45) Date of publication and mention
of the grant of the patent:
**15.08.2012 Bulletin 2012/33**

(51) Int Cl.:
*A23L 1/00* (2006.01)     *A21D 13/00* (2006.01)
*A23L 1/03* (2006.01)     *A23L 1/19* (2006.01)
*A23L 1/216* (2006.01)     *A23L 1/39* (2006.01)

(21) Application number: **09766660.6**

(22) Date of filing: **17.06.2009**

(86) International application number:
**PCT/JP2009/060986**

(87) International publication number:
**WO 2009/154212 (23.12.2009 Gazette 2009/52)**

(54) **PROCESSED FOOD AND METHOD OF PRODUCING THE SAME**

VERARBEITETE NAHRUNGSMITTEL UND VERFAHREN ZU DEREN HERSTELLUNG

ALIMENT TRANSFORMÉ ET SON PROCÉDÉ DE PRODUCTION

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **19.06.2008 JP 2008160840**

(43) Date of publication of application:
**06.04.2011 Bulletin 2011/14**

(73) Proprietors:
• **Ajinomoto Co., Inc.
Tokyo 104-8315 (JP)**
• **Amano Enzyme Inc.
Nagoya-shi
Aichi 460-8630 (JP)**

(72) Inventors:
• **MIWA, Noriko
Kawasaki-shi
Kanagawa 210-8681 (JP)**
• **OHASHI, Wakako
Kawasaki-shi
Kanagawa 210-8681 (JP)**

(74) Representative: **Strehl Schübel-Hopf & Partner
Maximilianstrasse 54
80538 München (DE)**

(56) References cited:
**EP-A1- 1 839 491     WO-A1-2006/075772
WO-A2-2008/138900     JP-A- 2003 250 460**

**Description**

TECHNICAL FIELD

The present invention relates to a processed food characterized by using a deamidated milk raw material obtained by adding a protein deamidating enzyme to a milk raw material for reaction, and a starch raw material and a method thereof.

BACKGROUND

Now in our country, according to food diversification and convenience or women's social advancement, needs for processed foods or semi-processed foods, both of which are sold in super markets or convenience stores are increasing. Also in the food-service industry such as restaurant etc., use of processed foods or semi-processed foods has been increasing in order to shortening of hours, cost-cutting, uniformity in offered foods etc., the demand for processed foods is also increasing day by day. However, a processed food manufactured by using starch-containing raw materials such as wheat flour, potato starch etc. is often eaten a few hours after cooking, and changes over time occur during a period until customers buy it, or while bringing it to a place for eating. There are problems that color, gloss and texture, which are determining "deliciousness" of foods, deteriorate due to thawing or reheating by customers. For example, a white thing in itself turns yellow, loss in gloss occurs, a moist texture becomes dry and rough etc. In order to prevent these deteriorations, efforts have been made to devise a manufacture method of processed foods made from starch raw materials and to study addition of additives in the food industry.

A processed food manufactured by using a starch-containing raw material such as wheat flour, corn, potato is often stored and distributed in the form of refrigerated (chilled) food or frozen food in a low temperature range. At this time, a deterioration of quality such as taste etc. occurs by starch retrogradation, and further, a deterioration in quality such as taste, texture, flavor etc. tends to be accelerated due to water evaporation from foods caused by reheating at a suitable temperature range for eating. For these problems, as a method for suppressing reduction in quality, it has often been the practice to add an enzyme such as alpha-amylase, beta-amylase, glucoamylase etc. for suppression of starch retrogradation. In particular, a method for suppressing quality deterioration due to starch retrogradation of starch-containing food by using alpha-glucosidase (trans-glucosidase), which is disclosed in Patent Document 1, has excellent performance, thus, it has been put into practical use in rice foods etc. for convenience stores. In addition, it has been also reported on modification technology for processed foods by using carbohydrates and polysaccharide thickeners such as a method of adding reducing sugars such as trehalose etc. (Patent Document 2), a method of using glucans having a cyclic structure and a branched structure (Patent Document 3), a method of using food improving agents containing cassia gum (Patent Document 4). Further, many methods for improvement have been proposed such as a method of adding emulsifiers and fats (Patent Document 5).

However, excepting for the method of using an alpha-glucosidase disclosed in Patent Document 1, these methods cause another problem of giving rise to the deterioration in quality such as taste, texture, flavor etc. which are inherent in processed foods, thus effect of improvement is not sufficient. In addition, addition of enzymes requires process changes in the during manufacturing processes of processed foods, or it offers a problem of reaction control etc., thus the conventional technology known in the art has not yet reached a completely satisfied method at present.

A protein deamidating enzyme, which acts directly on an amide group in proteins, is an enzyme to catalyze a reaction of deamidation. Thereby it causes transformation of glutamine residue into glutamic acid residue and generation of carboxylic group, which results in an increasing of negative charge, an increasing of electrostatic repulsive force, a decreasing of isoelectric point, an increasing of hydration capability etc. of protein. As a result, it has been known that various improvements of functionalities such as an increasing of solubility of protein and dispersion of protein in water, an improvement of emulsification ability and emulsion stability etc. are rendered (Non-Patent Documents 1, 2; Patent Documents 6-8).

Methods by using a protein deamidating enzyme for foods have been disclosed in Patent Documents 6, 8 and 9, and there are in these prior art documents descriptions relating to an improvement of functional properties of wheat flour gluten, milk protein (mainly whey protein) by using the enzyme, or descriptions of a texture improvement of dairy products such as yogurts or cheeses. However, there is no disclosure at all on achieving effects such as a remarkable effect of texture and quality improvement, a suppressing effect of retrogradation, in particular, improvement effects of color, gloss and texture and suppressing effect of deterioration over time after cooking, specifically during storage under chilling temperature, or the retrogradation deterioration at the time of freeze-thawing, when an appropriate amount of deamidated milk or a powdered milk product obtained from the milk is admixed into a processed food using a starch-containing raw material as its raw material.

[Patent Document 1] International Publication No. WO2005/096839
[Patent Document 2] Japanese Patent Kokai Publication No. JP-A-08-163850
[Patent Document 3] Japanese Patent Kokai Publication No. JP-P2000-236825A
[Patent Document 4] Japanese Patent Kokai Publication No. JP-P2006-223189A
[Patent Document 5] Japanese Patent Kokai Publication No. JP-A-03-175940
[Patent Document 6] Japanese Patent Kokai Publication No. JP-P2000-50887A
[Patent Document 7] Japanese Patent Kokai Publication No. JP-P2001-218590A
[Patent Document 8] Japanese Patent Kokai Publication No. JP-P2003-250460A
[Patent Document 9] International Publication No. WO2006/075772

[Non-Patent Document 1] Yamaguchi et al. Appl. Environ. Microbiol., 66, 3337-3343 (2000)
[Non-Patent Document 2] Eur. J. Biochem 268 1410-1421 (2001)

DISCLOSURE OF THE INVENTION

PROBLEMS TO BE SOLVED BY THE INVENTION

The following analysis is given by a view of the present invention.
Under consideration of conventional technologies as disclosed above, it is an object of the present invention to provide a processed food containing a starch-containing raw material such as wheat flour or a processed corn product, a processed potato product etc. with an excellent color, gloss and texture, and having a suppressed deterioration over time after cooking and a suppressed retrogradation deterioration at the time of freeze-thawing, and a manufacture method thereof.

MEANS TO SOLVE THE PROBLEMS

In order to achieve the foregoing object, the present inventors focused on a milk material, which is a general raw material for the processed food, especially, focused on milk in which casein is present in the form of a micelle, and powdered milk products obtained from the milk. It is because, in a manufacture of processed foods, these are one of the raw materials most commonly used. The present inventors have assiduously conducted investigations on the means for a quality improvement of milk. As a result, it has been found that remarkable effects of improvements of color, gloss and texture, and a suppressing effect of deterioration over time are achieved by incorporating milk or powdered milk, both of which are deamidated by a protein deamidating enzyme, into a processed food as its raw material.
That is, the present invention is as follows

(1) A method for producing a processed food, which comprises using a deamidated milk raw material obtained by adding a protein deamidating enzyme to a milk raw material for reaction, and a starch-containing raw material.
(2) The method according to (1), wherein the milk raw material is milk or powdered milk.
(3) The method according to (1) or (2), wherein the starch-containing raw material is wheat flour, a processed corn product or a processed potato product.
(4) The method according to any one of (1) to (3), wherein the processed food is selected from the group consisting of bread, pizza, mashed potatoes, cake, custard cream, sauce, roux, stew and soup.
(5) The method according to any one of (1) to (4), wherein the amount of the protein deamidating enzyme added is between 0.1 and 50 units per gram of the milk proteins in the milk raw material.
(6) The processed food which is manufactured by the method according to any one of claims 1 to 5.

EFFECT OF THE INVENTION

According to the present invention, even in a case of using a starch-containing raw material, a processed food with an excellent color, gloss and texture, and a suppressed deterioration over time after cooking and a suppressed retrogradation deterioration upon freeze-thawing can be obtained.

BRIEF DESCRIPTION OF THE DRAWINGS

Fig. 1 shows a result of measurement of a physical property of white sauce (EXAMPLE 7).
Fig. 2 shows a result of a color measurement of tomato soup (EXAMPLE 8).
Fig. 3 shows a result of measurement of a physical property of tomato soup (EXAMPLE 8).

PREFERRED MODES FOR CARRYING OUT THE INVENTION

The milk raw material used in the present invention means material containing casein having a micelle structure, for example, mammalian milk such as cow milk, goat milk etc., skim milk thereof, formulated milk thereof, processed milk thereof, a concentrate thereof, a diluted product thereof with water, a dried product (powdered milk) thereof, a suspension or solution by suspending of dissolving dry powdered milk in water and the like. By the way, a milk raw material in the present invention may be coexistent with a component(s) such as proteins other than milk proteins, mineral salt, sugars, fats etc.

The protein deamidating enzyme used in the present invention acts directly to an amide group of a protein and causes deamidation without hydrolysis of peptide bonds and cross-linking of the protein. The kind of the protein deamidating enzyme is not limited as far as the protein deamidating enzyme possesses such a function. Examples of such enzyme include, but not limited to, enzymes disclosed in Japanese Patent Kokai Publication No. JP-P2000-50887A (Patent Document 6), Japanese Patent Kokai Publication No. JP-P2001-21850A <Reference 1>, WO2006/075772 (Patent Document 9). A protein deamidating enzyme, which has been prepared from a culture medium of a microorganism producing the protein deamidating enzyme, may be used. The microorganism for preparation of the protein deamidating enzyme is not particularly limited, and microorganisms such as Chryseobacterium, Flavobacterium, and Empedobacter are enumerated.

Publicly known separation and purification methods of protein (such as centrifuging, UF concentration, salting-out, various kinds of chromatography with ion-exchanging resin, etc.) can be used for a preparation method of the protein deamidating enzyme from a culture liquid for microorganism. For example, culture liquid is centrifuged to separate bacterial cells, and then salting-out and chromatography, etc. may be combined to obtain a target enzyme(s). When collecting enzymes from the interior of bacterial cells, the bacterial cells can be crushed by pressure processing or ultrasonic processing, for example, and then separated and purified as described above to obtain target enzymes. Bacterial cells may be recovered from a culture liquid by filtration or centrifuge, etc. prior to the processing steps above explained (such as crushing of bacterial cells, separation and purification). The enzymes may be powdered by drying such as freeze drying or vacuum drying, etc., and an appropriate diluent or drying auxiliary agent may be used at the drying step.

The activity of the protein deamidating enzyme of the present invention was measured by the following method:

(1) 0.1ml of aqueous solution containing the protein deamidating enzyme was added to 1 ml of 0.2 M phosphate buffer (pH 6.5) containing 30 mM Z-Gln-Gly, and incubated for 10 minutes at 37 degrees C, and then the reaction was ceased by adding 1 ml of 0.4 M TCA solution. 0.1 ml of an aqueous solution containing the protein deamidating enzyme was added to a solution containing 1 ml of 0.2M phosphate buffer (pH 6.5) containing 30 mM Z-Gln-Gly and 1 ml of 0.4M TCA solution, and incubated for 10 minutes at 37 degrees C to prepare a solution as a blank.

(2) An amount of ammonia generated by the reaction in a solution of (1) was measured by using Ammonia-test wako (manufactured by Wako Pure Chemical Industries, Ltd.). An ammonia concentration in a reaction solution was determined using a calibration curve indicating a relation between an ammonia concentration and variation of absorbance (at 630 nm) prepared using an ammonia standard solution (ammonium chloride).

(3) Activity of a protein deamidating enzyme, where the amount of enzyme required to produce 1 $\mu$mol of ammonia per 1 min is defined as 1 unit, was calculated by the following formula.

$$\text{Enzyme activity (u/ml)} = \text{(ammonia concentration in reaction solution}$$

$$\text{(mg/L)} \times (1/17.03) \times \text{(volume of enzyme solution/volume of enzyme}$$

$$\text{solution)} \times (1/10) \times \text{Df}$$

(17.03: molecular weight of ammonia 2.1: fluid volume of enzyme reaction system 0.1: volume of enzyme solution 10: reaction time Df: dilution rate of enzyme solution)

In a method of deamidating a milk raw material by adding a protein deamidaing enzyme to the milk raw material for reaction, the protein deamidating enzyme may be added to the milk raw material in the state of solution, alone or in combination with other raw materials. Reaction conditions for the protein deamidating enzyme (such as amount of enzyme, reaction time, temperature, pH of the reaction solution etc.) are not particularly limited, but the amount of enzyme added is preferably from 0.1 to 50 units, more preferably, from 0.1 to 25 units per 1 g (dry weight) of milk proteins. The reaction temperature is preferably from 5 to 80 degrees C, more preferably from 20 to 70 degrees C. The pH of the reaction solution is preferably from 2 to 10, more preferably from 4 to 8. The reaction time is preferably from 10 sec to 48 hours, more preferably from 10 min to 24 hours. In the present invention, it is important to change a casein micelle structure in the milk raw material. Condition for obtaining such a state may be suitably adjusted depending on the amount of milk protein and the amount of enzyme. For example, when the amount of enzyme is small, the reaction time may be extended.

The starch-containing raw material used in the present invention denotes a raw material, which contains starch and is used for manufacture of processed foods, and starch itself is also included. The raw material is not particularly limited so far as it contains starch, that includes not only starch such as potato starch, corn starch etc., processed starch treated with phosphoric acid, acetic acid etc., but also processed products of the plant containing starch as a component, that is, processed products obtained by applying processing treatment such as a grinding treatment, a crushing treatment, a heating treatment, a drying treatment, a concentration treatment etc. to potatoes such as potato, sweet potato etc., food grains such as wheat flour, rice etc., vegetables, root vegetables, and fruits, and wheat flour, rice flour, potato powder, boiled potato, corn powder, corn paste etc. are mentioned as examples.

The processed food, which is an object of the present invention, is no limited by kind of the food as far as the processed food is a processed food manufactured from a starch-containing raw material as its raw material. For example, mashed potatoes and a potato salad, in which a potato processed product is used as a raw material, bakeries such as bread, pancake, cake, pizza, cookie etc., in which flour is used as a raw material, sweets such as custard cream etc., roux products such as soup, white sauce, roux, stew etc., processed products such as tempura flour, fry flour, batter mix etc., and a corn soup using a corn processed product as a raw material etc. are mentioned.

According to the present invention, a mixing ratio of a deamidated milk raw material contained in a processed food is not particularly limited, and appropriate amount of the deamidated milk raw material for each product may be mixed. Thus, generally, the mixing ratio is preferably from 1 to 99%, more preferably from 5 to 95%. For example, in the case of bread or pizza, it is preferably from 1.5 to 10%, and in the case of mashed potatoes, it is preferably from 40 to 80%, and in the case of a custard cream, it is preferably from 40 to 70%, and in the case of pancake, it is preferably from 20 to 50%, and in the case of a white sauce, it is preferably from 70 to 95%, and in the case of a powdered soup, it is preferably from 5 to 60%.

The present invention will be explained in detail with following experimental examples and examples; however, the scope of the present invention is not limited to these examples.

EXPERIMENTAL EXAMPLE 1

To 10%(w/w) of powdered skim milk (low heat-type, Yotsuba Co., Ltd.) was added a protein glutaminase preparation (manufactured by Amano Enzyme Inc., 500U/g), which is a protein deamidating enzyme derived from Chryseobacterium, by 50U, 100U, 400U per 1 kg respectively (1.5U, 3U, 12U per 1 g of proteins in the milk respectively), and then subjected to reaction at 50 degrees C for 90 min. Subsequently, the enzyme was deactivated by heating in a boiling bath until the temperature reached 80 degrees C, and then the resultant was cooled. Further, in order to pulverization, it was subjected to freeze-drying after freezing at -80 degrees C to prepare deamidated skim milk powder. Non-deamidated skim milk powder was prepared in the same manner except for not adding the enzyme.

EXPERIMENTAL EXAMPLE 2

To commercially available milk (Magokoro rakunou 3.6 milk, Takanashi Milk Products Co.Ltd) was added a protein glutaminase preparation (manufactured by Amano Enzyme Inc., 500U/g), which is a protein deamidating enzyme derived from Chryseobacterium, by 600U per 1 L of the milk respectively (18U per 1 g of proteins in the milk), and then subjected to reaction at 50 degrees C for 90 min. Subsequently, the enzyme was deactivated by heating for 10 min in a boiling bath, and then the resultant was cooled to prepare deamidated milk. Non-deamidated milk was prepared in the same manner except for not adding the enzyme. Further, in order to pulverize the deamidated milk and non-deamidated milk, both of which were obtained by the above disclosed manner, they were subjected to freeze-drying after freezing at -80 degrees C to prepare deamidated milk powder and non-deamidated milk powder.

EXAMPLE 1

The deamidated skim milk powder (it is treated with the enzyme by 50, 100, 400U /kg of raw materials, 1.5U, 3U, 12U per 1g of proteins in the milk respectively) and the non-deamidated skim milk powder, both of which were obtained by the method disclosed in Experimental example 1, were used to produce bread. The bread was prepared from the raw materials listed in Table 1 by using a mixer (Cuisinart Food processor DLC-6 PRO II). A dry yeast (manufactured by Nissin Seifun Group Inc.), which had been previously dissolved with 5-times of hot water, was added to hard wheat flour (manufactured by Nissin Seifun Group Inc."Kameria"), sugar, salt and the skim milk. The resultant was mixed for 1 min and 40 sec with adding water to prepare dough, and a shortening (manufactured by Nissin Seifun Group Inc.) was kneaded into the dough and followed by mixing again for 30 sec. The dough obtained was subjected to first fermentation (at 30 degrees C and 75-80% humidity for 40 min) and then divided into 2 pieces of approximately equal quantity. After a bench time (at room temperature for 20 min), it was shaped, and subjected to --second fermentation (at 40 degrees C and 75-80% humidity for 50-60 min), and then baked (at 190 degrees C for 25 min) to manufacture bread. After 2 hours from baking (being allowed to cool down to room temperature), the bread was sliced into 2cm and sealed into a plastic bag. A sensory evaluation was performed by 5 proficient panels after storage under room temperature for 1 day and after storage under chilling temperature for 2 days. The evaluation was scored according to the following method:

3 points are given to a control product. A product of the invention is given 3 points when it is the same degree as the control product. When the degree is larger (stronger) than that of the control product, points given to the product are increased to 4 or 5 depending on the degree. On the contrary, when the degree is smaller (weaker) than that of the control product, the points are decreased to 2 or 1 depending on the degree. An average of 5 panels was calculated according to the above method. The result is shown in Table 2. As shown in Table 2, as compared to the control product, in the product of the invention, softness, moistness and chewiness were improved, and overall preference was also improved. In addition, it was confirmed that the softness and moistness were maintained after storage under chilling temperature in the product of the present invention.

[Table 1]

| Name of raw materials | Mixing ratio (%) |
|---|---|
| Hard wheat flour | 100 |
| Sugar | 5 |
| Salt | 2 |
| Shortening | 5 |
| Dry yeast | 2 |
| Water (for dry yeast) | 10 |
| Water | 55 |
| Skim milk powder (Control product or Product of the present invention) | 2 |

[Table 2]

| Evaluated items | After storage under room temperature for 1 day | | | |
|---|---|---|---|---|
| | Control product | Product of the present invention 50U/kg-raw materials | Product of the present invention 100U/kg-raw materials | Product of the present invention 400U/kg-raw materials |
| Softness | 3 | 3 | 3.2 | 3.6 |
| Moistness | 3 | 3.4 | 3.2 | 4.0 |
| Chewiness | 3 | 3.5 | 3.4 | 3.9 |
| Overall preference | 3 | 3.4 | 3.7 | 4.1 |

(continued)

| Evaluated items | After storage under chilling temperature for 2 days | | | |
|---|---|---|---|---|
| | Control product | Product of the present invention 50U/kg-raw materials | Product of the present invention 100U/kg-raw materials | Product of the present invention 400U/kg-raw materials |
| Softness | 3.3 | 2.8 | 3 | 5 |
| Moistness | 3 | 3.5 | 3.75 | 4.3 |
| Chewiness | 3 | 2.8 | 3.3 | 3.3 |
| Overall preference | 3 | 2.5 | 3.5 | 4.5 |

EXAMPLE 2

Pizza dough was prepared by using the deamidated skim milk powder (it was treated with the enzyme by 400U /kg of raw materials, 12U per 1g of proteins in the milk) and the non-deamidated skim milk powder, both of which were obtained by the method disclosed in Experimental example 1. The pizza dough was prepared from the raw materials listed in Table 3 by using a mixer (Cuisinart Food processor DLC-6 PRO II). A dry yeast (manufactured by Nissin Seifun Group Inc.), which had been previously dissolved with 5-times of hot water, was added to hard wheat flour (manufactured by Nissin Seifun Group Inc. "Kameria"), sugar, salt, and the powdered skim milk. The resultant was mixed for 1 min and 40 sec with adding water to prepare dough, and a shortening (manufactured by Nissin Seifun Group Inc.) was kneaded into the dough and followed by mixing again for 30 sec. The dough obtained was subjected to fermentation (at 30 degrees C and 75-80% humidity for 40 min) and then divided into 2 pieces of approximately equal quantity. After a bench time (at room temperature for 20 min), the resultant dough was rolled out into approximately 24 cm circle by a rolling pin and then baked (at 180 degrees C for 10 min) to manufacture half-baked pizza dough. Further, 40 g of pizza sauce (manufactured by Snow Brand Milk Products Co., Ltd), and 50 g of shred cheese (manufactured by Yotsuba Co., Ltd "Mix Cheese") were topped on the dough. After storage under chilling temperature for 3 days, the dough was baked (at 250 degrees C for 5 min). A sensory evaluation was performed by 4 proficient panels. As the result, the product of the present invention was the overall preferable dough, which was light and crispy and -had a good--melting texture.
[Table 3]

| Name of raw materials | Mixing ratio (%) |
|---|---|
| Hard wheat flour | 100 |
| Sugar | 3 |
| Salt | 1.3 |
| Shortening | 5 |
| Dry yeast | 0.87 |
| Water(for dry yeast) | 4.3 |
| Water | 55.7 |
| Skim milk powder (Control product or Product of the present invention) | 6.7 |

EXAMPLE 3

150 mL of the deamidated milk and the non-deamidated milk, both of which were obtained by the method disclosed in Experimental example 2, were filled into each beaker and then warmed by a microwave oven. After adding 50 mL of water thereto, 50 g of mashed potatoes base (manufactured by Calbee Foods Co., Ltd) was added thereto and stirred completely to prepare mashed potatoes. After cooling in a refrigerator for 2 hours, a sensory evaluation was performed by 6 proficient panels. The evaluation was scored according to the following method:

3 points are given to a control product. A product of the invention is given 3 points when it is the same degree as the control product. When the degree is larger (stronger) than that of the control product, points given to the product are increased to 4 or 5 depending on the degree. On the contrary, when the degree is smaller (weaker) than that of the control product, the points are decreased to 2 or 1 depending on the degree. An average of 6 panels was calculated according to the above method. The result is shown in Table 4. As shown in Table 4, while the control product had a dry and rough, and loose texture, in the product of the present invention, not only such texture remarkably decreased, but also it was clearly confirmed that the product of the present invention had effects that the product was soft and moist, and had a fine texture, and it easily formed a coherent mass.

[Table 4]

| Evaluated items | Control product | Product of the present invention |
|---|---|---|
| Dry and rough feel | 3 | 1.6 |
| Texture fineness of structure | 3 | 4.2 |
| Moistness | 3 | 4.8 |
| Hardness when broken | 3 | 2.4 |

EXAMPLE 4

Custard cream was prepared by using the deamidated milk and the non-deamidated milk, both of which were obtained by the method described in Experimental example 2. That is, 8 g of soft wheat flour (manufactured by Nissin Seifun Group Inc. "Nissin flour"), which had been previously passed through a sieve, 9 g of commercially available cornstarch (Oji cornstarch), and 20 g of granulated sugar were combined and added to the 100 ml of each milk raw material warmed by a microwave oven (at 700W, 1 min), and then stirred completely. While, 2 egg yolks had been previously broken with a whisk in a different container, and the mixture of each raw material and powders was added to the egg yolks under mixing and followed by warming by the microwave oven (at 700W, for 1 min). After heating, the resultant mixture was taken out of the microwave oven every 20 sec then rapidly stirred so as to avoid clumping. Thus obtained custard cream using the deamidated milk and the non-deamidated milk (product of the present invention and control product respectively) was allowed to stand at room temperature for at least 2 hours, and then a sensory evaluation was performed by 6 proficient panels. The evaluation was scored according to the following method:

3 points are given to a control product. A product of the invention is given 3 points when it is the same degree as the control product. When the degree is larger (stronger) than that of the control product, points given to the product are increased to 4 or 5 depending on the degree. On the contrary, when the degree is smaller (weaker) than that of the control product, the points are decreased to 2 or 1 depending on the degree. An average of 6 panels was calculated according to the above method. The result is shown in Table 5. As shown in Table 5, while the control product had a dry and rough, and loose texture, in the product of the present invention, texture fineness of its structure was improved, roughness was suppressed, and a smooth texture was improved. In addition, hardness remarkably decreased, viscosity remarkably increased, and creaminess increased. Not only the texture remarkably changed, but also change of appearances that yellow color from-eggs became bright could be clearly confirmed. -

[Table 5]

| Evaluated items | Control product | Product of the present invention |
|---|---|---|
| Texture fineness of structure | 3 | 4 |
| Color | 3 | 4 |
| Smoothness | 3 | 4.3 |
| Roughness | 3 | 2.1 |
| Viscosity | 3 | 4.3 |
| Hardness | 3 | 1.6 |
| Creaminess | 3 | 4.3 |

EXAMPLE 5

To commercially available milk (Magokoro rakunou 3.6 milk, Takanashi Milk Products Co., Ltd) was added a protein glutaminase (manufactured by Amano Enzyme Inc.), which is a protein deamidating enzyme, by 500U per 1 L of the milk (15U/ g of milk proteins) and then reacted at 55 degrees C for 60 min. Subsequently, the enzyme was deactivated in boiling water by heating until a temperature reached 95 degrees C and then the reactant was cooled to prepare PG treated milk. Non treated milk was used as a control. Custard cream was prepared by using the PG treated milk and the non treated milk, both of which were obtained by the above described method, from the raw materials listed in Table 6. That is, soft wheat flour (manufactured by Nissin Seifun "Nissin flour"), which had been previously passed through a sieve, cornstarch (Kawamitsu Bussan Co., Ltd "Tamasan cornstarch") were combined and added to each milk (at 25 degrees C), and then stirred completely. On the other hand, egg yolk and granulated sugar had been mixed well by a mixer in a different container, and the mixture of each milk and powders was added to the mixture under mixing, and then the resultant mixture was strained to put into a heatproof bowl to warm it by a microwave oven (at 500W for 2 min and 10 sec). The mixture was taken out of the microwave oven every 60 sec, 30 sec, 30 sec, 10 sec so as to avoid clumping, and rapidly stirred for each 10 sec, 15 sec, 40 sec, 10 sec, and then allowed to cool with fitly covering the surface thereof with a plastic wrap. Thus obtained custard cream using the PG treated milk and the non treated milk were the product of the present invention and the control product, respectively. For comparison, to a mixture of milk and powders was added alpha-glycosidase (AG: manufactured by Amano enzyme Inc.), which is a glycosyltransferase, by 0.05% per powders, and then the mixture thus obtained was reacted at 25 degrees C for 60 min, and by using the resulting product, custard cream was prepared in the same manner. That is, the custard cream using alpha-glycosidase treated milk was a comparative product. By the way, as disclosed in WO2005/096839 (Patent Document 1), the alpha-glycosidase has been known as an enzyme suppressing starch retrogradation. After allowing to cool these 3 products, a sensory evaluation was performed by 5 proficient panels. The evaluation was scored according to the following method:

3 points are given to a control product. A product of the invention is given 3 points when it is the same degree as the control product. When the degree is larger (stronger) than that of the control product, points given to the product are increased to 4 or 5 depending on the degree. On the contrary, when the degree is smaller (weaker) than that of the control, the points are decreased to 2 or 1 depending on the degree. According to the above method, the evaluation was performed. The result is shown in Table 7.

[Table 6]

| Name of raw materials | Control product | Product of the present invention | Comparative product |
|---|---|---|---|
| Egg yolk | 20.8 | 20.8 | 20.8 |
| Milk | 57.8 | 0 | 57.8 |
| PG treated milk (15.6U/g of proteins) | 0 | 57.8 | 0 |
| Granulated sugar | 11.6 | 11.6 | 11.6 |
| Cornstarch | 5.2 | 5.2 | 5.2 |
| Soft wheat flour | 4.6 | 4.6 | 4.6 |
| AG (0.05% per powders) | 0 | 0 | 0.7U |
| | 100 | 100 | 100 |

[Table 7]

| Evaluated items | Control product | Product of the present invention | Comparative product |
|---|---|---|---|
| Color | 3 | 3.8 | 3.0 |
| Gloss | 3 | 4.3 | 3.0 |
| Texture fineness of structure | 3 | 4.8 | 3.5 |
| Hardness | 3 | 1.8 | 3.3 |

(continued)

| Evaluated items | Control product | Product of the present invention | Comparative product |
|---|---|---|---|
| Smoothness | 3 | 4.8 | 3.5 |
| Creaminess | 3 | 4.5 | 3.3 |

As shown in Table 7, as compared to the control product and the comparative product, in the product of the present invention, texture fineness of its structure was improved, roughness was suppressed, texture smoothness was improved. In addition, hardness decreased, creaminess increased. Not only the texture remarkably changed, but also change of appearances that yellow color from eggs became bright and glossy could be clearly confirmed.

After the sensory evaluation, the product was divided into approximately half, and then the half amount of the product was filled into each tasting cup. The cups were covered with a plastic wrap, and then one was stored under a freezing temperature (at -20 degrees C), and the other was stored under a chilling temperature (at 5 degrees C). For 3 products stored under chilling temperature, a sensory evaluation for refrigeration resistance was preformed after storage under chilling temperature for 5 days in the same manner as described above. The result is shown in Table 8. The control product had a dry and rough, and loose texture, and hardness also increased, tendency of retrogradation of starch could be confirmed as compared to the product immediately after preparation. On the other hand, the product of the present invention had a fine texture of its structure, a smooth and creamy texture as the same as that of the product immediately after preparation. Further, a uniform feeling on the tongue and a good melting texture were maintained, and thus tendency to suppress retrogradation was clearly confirmed.

The 3 products stored under the freezing temperature were thawed in a refrigerator for more than 7 hours, and then a sensory evaluation was performed in the same manner described above. The result is shown in Table 8. The control product became more dry fragile, and rough texture as compared to the product stored under chilling temperature, due to freezing and thawing. On the other hand, in the product of the present invention, a fine texture of its structure, smoothness, creaminess, a uniform feeling on the tongue and a good melting texture as the same as that of the product before freezing and thawing, that is, the product immediately after preparation, were maintained. Thus, remarkable tendency to suppress retrogradation was recognized.

[Table 8]

| Evaluated items | After storage under chilling temperature for 5 days | | |
|---|---|---|---|
| | Control product | Product of the invention | Comparative product |
| Color | 3 | 3.8 | 3.3 |
| Gloss | 3 | 3.8 | 3.0 |
| Texture fineness of structure | 3 | 4.8 | 3.8 |
| Hardness | 3 | 1.3 | 3.8 |
| Smoothness | 3 | 5.0 | 3.5 |
| Creaminess | 3 | 4.8 | 3.3 |
| Comment | Texture is somewhat harder and retrogradated than that of the product immediately after preparation | Smooth and creamy textures are maintained | Texture is similar to that of the control product, but tendency to retrogradation is not recognized |
| Evaluated items | After freezing and thawing | | |
| | Control product | Product of the invention | Comparative product |
| Color | 3 | 3.8 | 3.3 |
| Gloss | 3 | 3.8 | 3.0 |

(continued)

| Evaluated items | After freezing and thawing | | |
| --- | --- | --- | --- |
| | Control product | Product of the invention | Comparative product |
| Texture fineness of structure | 3 | 4.8 | 3.8 |
| Hardness | 3 | 10 | 3.8 |
| Smoothness | 3 | 5.0 | 3.5 |
| Creaminess | 3 | 4.8 | 3.3 |
| Comment | Dry and rough textures are somewhat stronger and texture is retrogradated, as compared to the chilled product | Smooth and creamy textures are maintained | Texture is similar to that of the control product, but tendency to retrogradation is not recognized |

As disclosed above, it was shown by using the milk deamidated by PG treatment that retrogradation, that is, the deterioration of a texture during storage at law temperature and after freezing and thawing, of starch foods containing the milk as a raw material was inhibited, and the effect thereof was superior to that of an alpha-glycosidase, which is known as an enzyme for inhibiting starch retrogradation.

EXAMPLE 6

Pancakes were prepared by using the deamidated milk and the non-deamidated milk, both of which were obtained by the method described in Experimental example 2, and a pancake mix (manufactured by Morinaga Milk Industry Co., Ltd., raw materials: soft wheat flour, sugar, glucose, vegetable oil and fat, wheat starch, salt, starch syrup, baking powder, an emulsifier, a flavoring agent, casein Na, and a food colorant). 150 mL of each milk raw material and an egg (size M) were mixed rapidly in a bowl followed by adding 200 g of the pancake mix thereto and then mixed lightly again. The mixture was baked on the top side for 3 min and the bottom side for 2 min on a pan heated over high heat to make pancakes by using the non-deamidated milk (the control product) and using the deamidated milk (the product of the present invention). Freshly baked pancakes and pancakes allowed to stand under room temperature for 3 hours were evaluated by 7 proficient panels respectively. The evaluation was scored according to the following method:

3 points are given to a control product. A product of the invention is given 3 points if it is the same degree as the control product. When the degree is larger (stronger) than that of the control product, points given to the product are increased to 4 or 5 depending on the degree. On the contrary, when the degree is smaller (weaker) than that of the control product, the points are decreased to 2 or 1 depending on the degree. An average of 7 panels is shown in Table 9. As shown in Table 9, in the product of the present invention, yellow color after baking was brighter than that of the control product, fluffiness, moistness and chewiness were clearly improved, and overall preference was also improved, as compared to the control product.

[Table 9]

| Evaluated items | After cooling for 3.5 hours | |
| --- | --- | --- |
| | Comparative product | Product of the present invention |
| Fluffiness | 3 | 4.5 |
| Moistness | 3 | 4.1 |
| Chewiness | 3 | 4.5 |
| Overall preference | 3 | 4.3 |

(continued)

| Evaluated items | After freezing → reheating by the microwave | |
|---|---|---|
| | Comparative product | Product of the present invention |
| Fluffiness | 2.5 | 3.8 |
| Moistness | 2.3 | 3.9 |
| Chewiness | 2.5 | 4 |
| Overall preference | 2.8 | 4 |

EXAMPLE 7

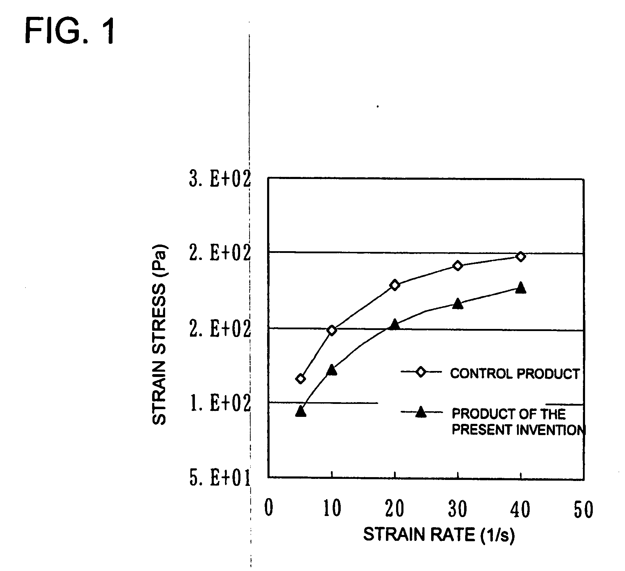

White sauces were prepared by using the deamidated milk and non-deamidated milk, both of which were obtained by the method disclosed in Experimental example 2. 20 g of butter (manufactured by Snow Brand Milk Products Co., Ltd) and 15 g of soft wheat flour ("Nissin flour") were weighed and put into a heat-resistant container (beaker), and then heated by a microwave oven (at 600W) for 1 min. The heated mixture was taken out of the microwave oven, and then rapidly stirred to avoid clumping. 100 mL of each milk raw material was added thereto. The resultant mixture was heated further for 2 min in the microwave oven, again, and 100 mL of each milk raw material was further added thereto under stirring, and mixed well until no clumps remained to prepare a white sauce. After preparation, the white sauce thus obtained was maintained at 60 degrees C, and then after 1 hour, a physical property measurement (apparatus: Rotovisco RV20 manufactured by HAAKE, measurement flow: shear rate was changed continuously 0- (min) → 100 (1/s) - (5min) →0, measurement condition: measurement temperature 60 degrees C, M5 measuring head, cone plate PK5) was performed. The result is shown in Figure 1. As shown in Figure 1, as to the relation between strain rate and strain stress, the strain stress in the product of the present invention was smaller than that of the control product at the same strain rate. The result indicates that the product of the present invention has a significantly low viscosity. Actually in the product of the present invention, it was confirmed that stickiness after cooking was suppressed.

Next, for the control product and the product of the present invention, white sauces were immediately placed into an incubation bath maintained at 25 degrees C after preparation, and then viscosity change while they were allowed to stand for 3 hours was investigated (apparatus: Brookfield viscometer DV-II, Rotor No.3, 6 rpm, the viscosity was measured after centrifuge for 30 sec). The result is shown in Table 10. As shown in Table 10, while the viscosity of the control product remarkably increased after 1 hour from starting incubation at 25 degrees C, in the product of the present invention, an increase in viscosity over time was suppressed.

[Table 10]

| Standing time under room temperature(h) | Viscosity (cP) | |
|---|---|---|
| | Control product | product of the present invention |
| 0 | 5017 | 6767 |
| 1 | 11433 | 8067 |
| 3 | 11250 | 8083 |

A sensory evaluation was performed for these white sauces before and after storage. The result is shown in Table 11. As shown in Table 11, a milky smell in the product of the present invention was decreased, softness of its structure remarkably improved, and melting texture was also improved, as compared to the control product. Further in the product of the present invention, change of appearances such that gloss and whiteness became strong etc., was also observed. The white sauces after storage under freezing temperature (-20 degrees C) for 3 weeks were thawed at room temperature for about 3 hours, further, subjected to warming by the microwave oven (at 500W for 30 sec), and then they were eaten (n=2). In the product of the present invention, a dry and rough texture was decreased as compared to the control product and comparative product, and it was soft, and a glossy, smooth texture was maintained.

[Table 11]

| Evaluated items | Control product | Product of the present invention |
|---|---|---|
| Milky smell | 3 | 2.29 |
| Smoothness of structure | 3 | 4.86 |
| Melting texture | 3 | 3.71 |
| Gloss | 3 | 4.86 |
| | n=7 | |

EXAMPLE 8

Using the deamidated milk powder and the non-deamidated milk powder, both of which were obtained by the method in Experimental example 2, corn soup powder, tomato soup powder and mushroom soup powder were experimentally produced, respectively, by mixing each raw material according to raw material compositions in Table 12.
[Table 12]

| (1) Tomato soup | Mixing ratio (%) |
|---|---|
| Tomato powder | 24 |
| Milk powder (control product or product of the present invention) | 21 |
| Dextrin | 17 |
| Sugar | 12 |
| Starch | 10 |
| Edible vegetable oil | 8 |
| Salt | 4 |
| Seasoning (amino acid etc.) | 4 |
| Total | 100 |
| (2) Mushroom soup | Mixing ratio (%) |
| Milk powder (control product or product of the present invention ) | 32 |
| Starch | 19 |
| Dextrin | 19 |
| Salt | 6 |
| Edible vegetable oil | 6 |
| Sugar | 5 |
| Mushroom powder | 4 |
| Cheese powder | 4 |
| Spice | 3 |
| Seasoning (amino acid etc.) | 2 |
| Total | 100 |
| (3) Corn soup | Mixing ratio (%) |
| Corn powder | 20 |
| Milk powder (control product or product of the present invention) | 20 |
| Dextrin | 18 |
| Sugar | 15 |
| Starch | 10 |

(continued)

| (3) Corn soup | Mixing ratio (%) |
|---|---|
| Edible vegetable oil | 8 |
| Salt | 5 |
| Seasoning (amino acid etc.) | 4 |
| Total | 100 |

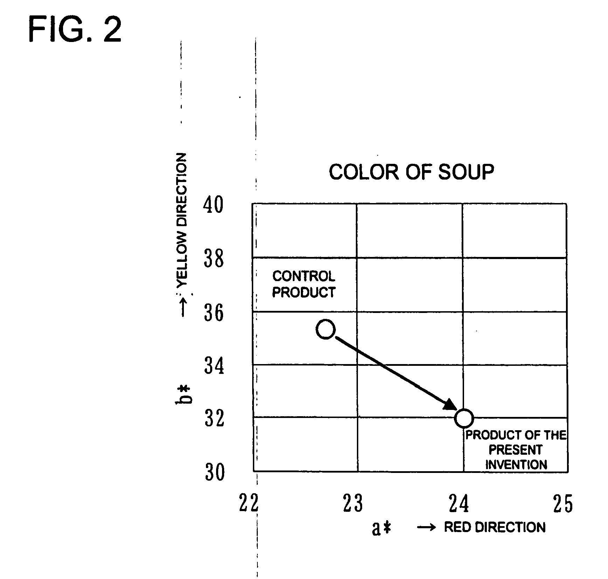

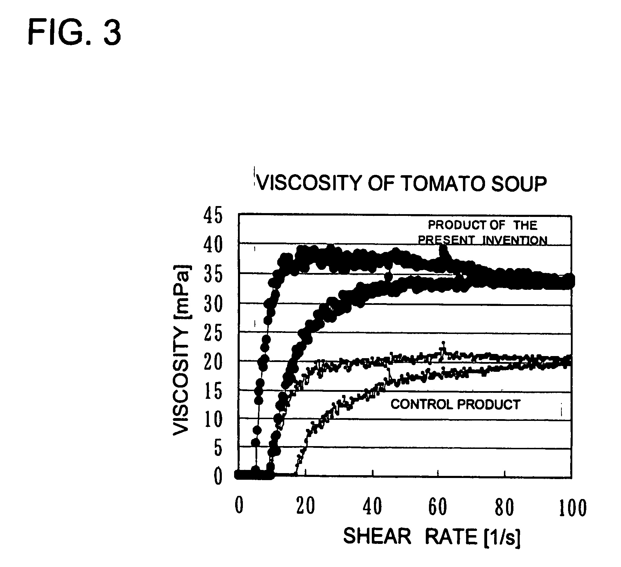

150 mL of boiling water was poured into 17 g of each soup powder, and then stirred well for 15 sec. For thus prepared soups, evaluations for color, physical property and texture were performed. In the sensory evaluation by 6 proficient panels, every soup obtained by using the deamidated milk powder (product of the present invention) had a high viscosity, and a rich texture was imparted to them. Further, with regard to soup color of a corn soup, a tomato soup, and a mushroom soup of the product of the present invention, color of material was brighter than that of the control product or the comparative product. The result is concretely explained by taking the tomato soup as an example. In the result of color measurement (Figure 2) by using a spectrophotometer (CM3500d, manufactured by Konica Minolta Holdings, Inc), in the product of the invention, a* value increased and b* value decreased. Thus, this result indicates that redness increased, and coloring of tomato became deeper. By the way, as shown in Figure 3, the viscosity of the tomato soup increased as compared to the control product, as measured by using the milk raw material of the present invention (apparatus: Rotovisco RV20 manufactured by HAAKE, measurement flow: shear rate was changed continuously 0-( 5min) → 100( 1/s) -( 5min) → 0, measurement condition: measurement temperature 60 degrees C, M5 measuring head, cone plate PK5). This result also shows that a rich texture was imparted. These tendencies were similar to that of the corn soup and the mushroom soup. That is, in the case of the corn soup, yellow color increased, and in the case of the mushroom soup, brown color increased. Both of them had the rich texture.

INDUSTRIAL APPLICABILITY

According to the present invention, in the case of manufacturing a processed food by using a starch raw material, it is possible to obtain the processed food with an excellent color, gloss, texture, and a suppressed deterioration over time after cooking. Therefore, the present invention is extremely useful in the industrial field of foods.

**Claims**

1.  A method for producing a processed food, comprising:

    using a deamidated milk raw material obtained by adding a protein deamidating enzyme to a milk raw material for reaction, and a starch-containing raw material.

2.  The method according to claim 1, wherein the milk raw material is milk or powdered milk.

3.  The method according to claim 1 or 2, wherein the starch-containing raw material is wheat flour, a processed corn product or a processed potato product.

4.  The method according to any one of claims 1 to 3, wherein the processed food is selected from the group consisting of bread, pizza, mashed potatoes, cake, custard cream, sauce, roux, stew, and soup.

5.  The method according to any one of claims 1 to 4, wherein the amount of the protein deamidating enzyme added ranges from 0.1 to 50 units per gram of the milk proteins in the milk raw material.

6.  A processed food, which is produced by the method according to any one of claims 1 to 5

**Patentansprüche**

1.  Verfahren zum Herstellen eines verarbeiteten Nahrungsmittels, welches umfasst:

die Verwendung eines deamidierten Milchausgangsmaterials, erhalten durch Zugeben eines Proteindeamidierungsenzyms zu einem Milchausgangsmaterial für die Reaktion, und eines Stärke enthaltenden Ausgangsmaterials.

2. Verwendung nach Anspruch 1, wobei das Milchausgangsmaterial Milch oder pulverisierte Milch ist.

3. Verwendung nach Anspruch 1 oder 2, wobei das Stärke enthaltende Ausgangsmaterial Weizenmehl oder ein verarbeitetes Getreideprodukt oder verarbeitetes Kartoffelprodukt ist.

4. Verfahren nach einem der Ansprüche 1 bis 3, wobei das verarbeitete Nahrungsmittel aus der Gruppe ausgewählt ist, die aus Brot, Pizza, Kartoffelpüree, Kuchen, Kochpudding, Sauce, Mehlschwitze, Eintopf und Suppe besteht.

5. Verfahren nach einem der Ansprüche 1 bis 4, wobei die Menge des zugegebenen Proteindeamidierungsenzyms im Bereich von 0,1 bis 50 Einheiten pro g der Milchproteine in dem Milchausgangsmaterial ist.

6. Durch das Verfahren nach einem der Ansprüche 1 bis 5 hergestellte verarbeitete Nahrungsmittel.


**Revendications**

1. Procédé pour produire un aliment transformé, comprenant :

   l'utilisation d'une matière première de type lait désamidé obtenue par addition d'une enzyme de désamidation des protéines à une matière première de type lait pour la réaction, et d'une matière première contenant de l'amidon.

2. Procédé selon la revendication 1, où la matière première de type lait est du lait ou du lait en poudre.

3. Procédé selon la revendication 1 ou 2, où la matière première contenant de l'amidon est de la farine de froment, un produit de maïs transformé ou un produit de pomme de terre transformé.

4. Procédé selon l'une quelconque des revendications 1 à 3, où l'aliment transformé est choisi dans le groupe consistant en le pain, les pizzas, la purée de pommes de terre, les pâtisseries, la crème anglaise, les sauces, le roux, les ragoûts et la soupe.

5. Procédé selon l'une quelconque des revendications 1 à 4, où la quantité d'enzyme de désamidation des protéines ajoutée va de 0,1 à 50 unités par gramme des protéines du lait dans la matière première de type lait.

6. Aliment transformé qui est produit par le procédé selon l'une quelconque des revendications 1 à 5.

FIG. 1

# FIG. 2

COLOR OF SOUP

CONTROL PRODUCT

PRODUCT OF THE PRESENT INVENTION

b* — YELLOW DIRECTION

40

38

36

34

32

30

22   23   24   25

a*   →   RED DIRECTION

EP 2 305 047 B1

# FIG. 3

VISCOSITY OF TOMATO SOUP

PRODUCT OF THE PRESENT INVENTION

CONTROL PRODUCT

VISCOSITY [mPa]

SHEAR RATE [1/s]

EP 2 305 047 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005096839 A
- JP 8163850 A
- JP P2000236825 A
- JP P2006223189 A
- JP 3175940 A
- JP P200050887 A
- JP P2001218590 A
- JP P2003250460 A
- WO 2006075772 A
- JP P200121850 A

### Non-patent literature cited in the description

- **YAMAGUCHI et al.** *Appl. Environ. Microbiol.,* 2000, vol. 66, 3337-3343
- *Eur. J. Biochem,* 2001, vol. 268, 1410-1421